# EUROPÄISCHE PATENTSCHRIFT

(11) **EP 1 895 641 B1**
(45) Veröffentlichungstag und Bekanntmachung des Hinweises auf die Patenterteilung: **12.07.2017**
(21) Anmeldenummer: 07010326.2
(22) Anmeldetag: 24.05.2007
(51) Int. Cl.: H02K 7/14, H02K 15/16

(54) **Lagerloser Direktantrieb**
Direct drive without bearings
Entraînement direct sans palier

(30) Priorität: 30.08.2006 DE 102006040611
(43) Veröffentlichungstag der Anmeldung: 05.03.2008
(73) Patentinhaber: ROBERT BOSCH GMBH, 70469 Stuttgart (DE)
(72) Erfinder: Gröning, Ingolf, 97816 Lohr (DE)
(74) Vertreter: Thürer, Andreas

(56) Entgegenhaltungen:
- US-A- 5 952 746
- US-A1- 2002 121 819

## Beschreibung

Die Erfindung befasst sich mit einem lagerlosen Direktantrieb gemäß dem unabhängigen Anspruch.

Die Patentschrift DE 41 43 597 C2 zeigt einen Antrieb, wie er beispielsweise in Druckmaschinen Verwendung findet. Aufgrund der sehr vielen Einzelteile, mittels derer der Antrieb an Maschinengehäuse und Maschinenwelle montiert wird, gestaltet sich die Montage als relativ zeitaufwendig und kompliziert. Außerdem ist der Wartungsaufwand hoch, weil zur Demontage oder für den Austausch des Antriebes dieser in sämtlichen Einzelteile zerlegt werden muss. Die verwendete Lagerung unterliegt außerdem einem Verschleiß.

Die Aufgabe der Erfindung ist es, ein Bausatzkonzept für einen lagerlosen Direktantrieb bereitzustellen, welches eine sichere Montage des Antriebes ohne Verwendung von Lagern ermöglicht.

Diese Aufgabe löst die Erfindung mittels eines lagerlosen Direktantriebes zur Ankopplung an eine Welle, insbesondere einer Druckmaschinenwelle, wobei der Antrieb einen Rotor und einen Stator umfasst, wobei Rotor und Stator koaxial zueinander innerhalb eines Gehäuses angeordnet sind, wobei eine erste Stirnfläche des Gehäuses aus einem Anschlussflansch mit zentraler Ausnehmung und eine zweite Stirnfläche des Gehäuses aus einer dem Anschlussflansch gegenüberliegenden und abnehmbare Abdeckung besteht, wobei der Stator fest mit dem Gehäuse verbunden ist und insbesondere Anschlussflansch, Rotor und Abdeckung Arretierungsmittel umfassen, mittels derer der Rotor innerhalb des Gehäuses in radialer und/oder axialer Richtung fixierbar ist.

Der Vorteil dieser Lösung liegt auf der Hand. Stator und Rotor können sicher gegeneinander abgestützt werden, beispielsweise während des Transportes, womit Beschädigungen vermieden werden können.

Bevorzugt sind am Umfang der zentralen Ausnehmung des Anschlussflansches Vorsprünge koaxial zur Rotorachse und Statorachse angeordnet und ragen in den Gehäuseinnenraum hinein, wobei an der dem Anschlussflansch zugewandten Stirnseite des Rotors ebenfalls Vorsprünge koaxial zu Rotorachse und Statorachse angeordnet sind, wobei die Vorsprünge an Anschlussflansch und Rotor derart ausgebildet sind, dass sich Rotor und Anschlussflansch durch eine axiale Bewegung des Rotors in Richtung des Anschlussflansches mittels einer an der Abdeckung angeordneten Schubstange derart gegeneinander verspannen, dass Rotor und Stator zueinander zentriert sind.

Da Rotor und Stator stets koaxial zueinander innerhalb des Gehäuses bei gleichmäßiger Beabstandung (Luftspalt) zueinander angeordnet sind, wird Beschädigungen speziell an Rotor- und/oder Statoroberflächen vorgebeugt. Die gesamte Montage der Anordnung ist von der B-Seite (Geberseite) des Motors aus möglich, während lediglich die Gehäusemontage an einer Maschinenwandung abtriebsseitig (A-Seite) mittels eines Flansches erfolgt. Lager werden nicht benötigt, da der Abstand (Luftspalt) zwischen Stator und Rotor automatisch gewährleistet ist. Auch für axial sehr lange Motoren mit höheren Toleranzen kann ohne weiteres das erfindungsgemäße Konzept verwendet werden.

Besonders bevorzugt umfasst der Rotor Klemmverbinder, mittels derer er mit einer anzutreibenden Welle fest verbindbar ist. Vorzugsweise klemmen diese Verbinder den Rotor auf gesamter Rotorlänge oder zumindest an zwei gegenüberliegenden Seiten an der Welle fest. Auch ist es vorteilhaft, wenn die Klemmverbindung vorzugsweise von der B-Seite des Motors her zugänglich ist, was die Montage vereinfacht. Das Klemmen verhindert ein Taumeln des Rotors sicher, denn Ursache für das Taumeln sind radial wirkende Kräfte des Rotors, verursacht durch zum Beispiel am Rotor angeordnete Permanentmagnete oder Toleranzen in der Produktion, die wie eine Unwucht wirken.

Weiter bevorzugt ist am Stator ein in axialer Richtung flexibel und in radialer Richtung steif angeordneter Geber angeordnet. Der Geber bleibt dadurch zentriert und koaxial zu Rotor und Stator gelagert, er kann jedoch axiale Bewegungen ohne weiteres mitmachen.

Besonders bevorzugt umfasst der Anschlussflansch an der den Vorsprüngen gegenüberliegenden Montageseite Zentriermittel, welche koaxial zum Stator und Rotor angeordnet sind, wobei der Anschlussflansch Aüsnehmungen zur Befestigung an einem Widerlager umfasst. Die Zentriermittel helfen bei der Montage des lagerlosen Direktantriebes den Luftspalt konstant und auf gewünschter radialer Breite zu halten. Die Ausnehmungen in Form von Bohrungen ermöglichen eine einfache Befestigung des Flansches an der Maschine, beispielsweise mittels Schrauben.

Vorteilhafterweise ist eine Maschine mit anzutreibender Welle mit einem lagerlosen Direktantrieb nach einem der vorhergehenden Ansprüche ausgestattet, wobei der Rotor auf der Maschinenwelle aufgeklemmt ist und das Motorgehäuse mittels des Anschlussflansches an der Maschine angeordnet ist, wobei der Rotor innerhalb des Stators mittels der Welle rotierbar ist. Der Antrieb ist wenig wartungsintensiv und eine Montage oder Demontage aufgrund des erfindungsgemäßen Konzeptes sehr einfach und schnell möglich. Dies wirkt sich positiv auf die Kosten der Maschine aus.

**Bezugszeichenliste**

| | |
|---|---|
| 1 | Antrieb |
| 2 | Welle |
| 3 | Rotor |
| 4 | Stator |
| 5 | Gehäuse |
| 6 | Flansch |
| 7 | Abdeckung |
| 8a | Rotorseitiger Vorsprung |
| 8b | Flanschseitiger Vorsprung |
| 8c | Fixierung |
| 9 | Geberankopplung |
| 10 | Klemmbügel |
| 11 | Geber |
| 12 | Zentrierung |

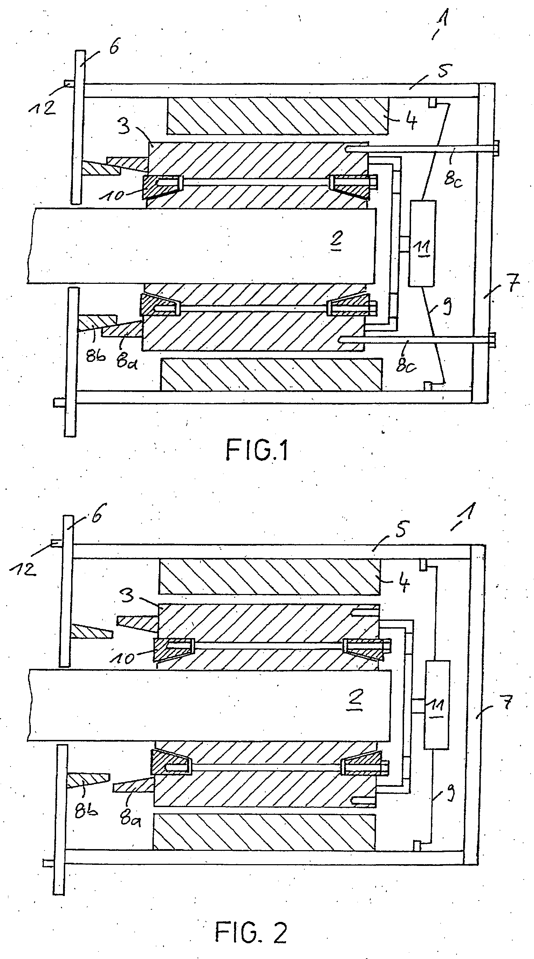

Figur 2 zeigt die erfindungsgemäße Maschine im montierten, ungesicherten Zustand.

Der in Figur 1 und 2 gezeigte erfindungsgemäße lagerlose Direktantrieb 1 umfasst einen Rotor 3 und einen Stator 4, wobei Rotor 3 und Stator 4 koaxial zueinander innerhalb eines Gehäuses 5 angeordnet sind, wobei die montageseitige Stirnfläche des Gehäuses 5 aus einem Anschlussflansch 6 mit zentraler Ausnehmung und die der montageseitige Stirnfläche des Gehäuses 5 gegenüberliegende Seite aus einer abnehmbaren Abdeckung 7 besteht. Der Stator 4 ist fest mit dem Gehäuse 5 verbunden. Der Anschlussflansch 6, die Abdeckung 7 und der Rotor 3 umfassen Arretierungsmittel 8a,b,c in Form von motorseitigen Vorsprüngen 8a, flanschseitigen Vorsprüngen 8b und stiftförmigen Arretierungen 8c, die sich zwischen Abdeckung 7 und Rotor 3 erstrecken. Mittels der Fixierungen 8c ist der Rotor 3 innerhalb des Gehäuses 5 in radialer und/oder axialer Richtung arretierbar. Die flanschseitigen Vorsprünge 8b sind koaxial zur Rotorachse und Statorachse angeordnet und ragen in den Innenraum des Gehäuses 5 hinein. Der Rotor 3 umfasst Klemmbügel 10, mittels derer er mit einer anzutreibenden Welle 2 fest verbindbar ist. Am Stator 4 ist ein in axialer Richtung flexibel und in radialer Richtung steif angeordneter Geber 11 mittels einer Geberankopplung 9 angeordnet. Der Anschlussflansch 6 umfasst an der den Vorsprüngen 8b gegenüberliegenden Montageseite eine Zentrierung (hier Zentrierstifte) 12, welche koaxial zum Stator und Rotor angeordnet sind. Der Anschlussflansch 6 umfasst ebenfalls Ausnehmungen zur Befestigung an einem Widerlager (z.B. Bohrungen).

In beiden Figuren 1 und 2 ist eine maschinenseitige Welle 2 angedeutet, die nicht Bestandteil des Direktantriebes 1 ist.

Der Unterschied zwischen Figur 1 und Figur 2 besteht darin, dass in Figur 1 der Rotor 3 noch mittels der Arretiermittel 8a,b,c innerhalb des Gehäuses 5 und koaxial zum Stator 4 fixiert ist, wobei Figur 2 einen bereits auf einer Welle 2 befestigten Rotor 3 zeigt, der frei drehbar ist.

Wie einfach der erfindungsgemäße lagerlose Direktantrieb 1 montiert werden kann, soll nachfolgend beschrieben werden.

Der Motor benötigt keinerlei Lager, welche den Luftspalt zwischen Rotor 3 und Stator 4 gewährleisten, denn im nicht montierten Zustand sorgen die Arretierungsmittel 8a,b,c für eine korrekte Lagerung. Im montierten Zustand ist die Lagerung automatisch aufgrund der Einführung der Zentrierung 12 in korrespondierende Ausnehmungen an einem Widerlager (z.B. Maschinenwandung) und aufgrund der Anordnung des Rotors 3 an der anzutreibenden Welle 2 gewährleistet.

Im nicht montierten Zustand (Figur 1, Lagerung, Transport) wird die Beabstandung zwischen Rotor 3 und Stator 4 A-seitig (Montageseitig) mittels der vorzugsweise konisch ausgeführten Vorsprünge 8a, b realisiert. Aufgrund der koaxialen Anordnung dieser Vorsprünge 8a,b um die virtuelle Drehachse des Rotors 3 ist gleichzeitig eine Zentrierung des Rotors 3 im Stator 4 gewährleistet. B-seitig (Geberseitig) wird die Beabstandung zwischen Rotor 3 und Stator 4 mittels der Fixierung 8c gewährleistet. Es handelt sich hierbei um einen Stift 8c, welcher durch eine Bohrung der Abdeckplatte 7 in eine Ausnehmung des Rotors 3 von außen eingeführt wird und eine axiale Verschiebung des Rotors 3 in Richtung der Vorsprünge 8b bei geschlossenem Gehäuse 5 ermöglicht. Somit ist der Rotor 3 sowohl in axialer als auch in radialer Richtung innerhalb des Gehäuses 5 fixierbar.

Die Montage des lagerlosen Direktantriebes erfolgt einfach durch Aufschieben des den Stator 4 und Rotor 3 umfassenden Gehäuses 5 auf die anzutreibende Welle 2. Der innerhalb des Gehäuses 5 fixierte Rotor 3 wird mittels der bereits weiter oben beschriebenen zentralen Ausnehmung im Flansch 6 auf die Welle 2 aufgeschoben, während gleichzeitig die Statorzentrierungen 12 in maschinenseitige korrespondierende Ausnehmungen eintauchen, so dass Stator 4 und Rotor 3 koaxial und auf Abstand gehalten werden, wobei die Gesamtanordnung automatisch mittels der Zentrierungen 12 und der Welle 2 geführt ist. Nach Demontage der B-seitigen Abdeckung 7 wird der Klemmbügel, welcher ausschließlich von der B-Seite her zugänglich ist, angezogen, so dass der Rotor 3 an der Welle 2 aufgeklemmt wird. Anschließend wird das Gehäuse 5 axial in Richtung Widerlager verschoben und hier angeschraubt, wobei der Stator 4 relativ zum Rotor 3 seine Position verändert. Während dieser Annäherung des Gehäuses 5 an die Maschine lösen sich die A-seitigen, ineinander verkeilten,Vorsprünge 8a und 8b und der an die Welle 2 aufgeklemmte Rotor 3 kann frei drehen. Die Abmessungen der Gesamtanordnung sind dabei so gewählt, dass nach dem Anschrauben des Gehäuses 5 an der Maschine der Rotor 3 von den aktiven Teilen des Stators 4 vollständig überdeckt wird und frei drehbar ist, um das maximale Drehmoment zu gewährleisten. Die Geberankopplung 9 ist in axialer Richtung beweglich und fixiert den Geber 11 lediglich in radialer Richtung. Dadurch kann auch der Geber 11, welcher am Gehäuse 5 und Rotor 3 angeordnet ist, axial mit dem Rotor 3 mitbewegt werden. Die Demontage erfolgt in umgekehrter Reihenfolge, d.h. Lösen des Gehäuseflansches 6, radiale Fixierung des Rotors 3 durch axiales Abziehen des Stators 4, Lösen der Klemmverbindung 10 am Rotor 3, Einbringen der B-seitigen Fixierung 8c in die Bohrungen der zuvor angebrachten Abdeckung 7, wobei die Fixierung 8c zusätzlich in die speziell dafür vorgesehenen Bohrungen im Rotor 3 eingebracht werden. Die Fixierungen 8c haben zwei Funktionen. Sie dienen zum einen der Fixierung des Rotors 3 innerhalb des Gehäuses 5 in radialer und axialer Richtung beispielsweise während des Transportes. Zusätzlich erleichtern sie das Abziehen des Gehäuses 5, indem sie auf den Rotor 3 axial gerichteten Druck ausüben.

## Patentansprüche

1. Lagerloser Direktantrieb zur Ankopplung an eine Welle (2), insbesondere der Welle (2) einer Druckmaschine, wobei der lagerlose Antrieb einen Rotor (3) und einen Stator (4) umfasst, wobei Rotor (3) und Stator (4) koaxial zueinander innerhalb eines Gehäuses (5) angeordnet sind, **dadurch gekennzeichnet, dass** das eine erste Stirnfläche des Gehäuses aus einem Anschlussflansch (6) mit zentraler Ausnehmung und eine zweite Stirnfläche des Gehäuses aus einer dem Anschlussflansch gegenüberliegenden und abnehmbare Abdeckung (7) besteht, wobei der Stator (4) fest mit dem Gehäuse (5) verbunden ist und Arretierungsmittel (8 a,b,c) umfasst sind, insbesondere von Anschlussflansch (6), Abdeckung (7) und Rotor (3), mittels derer der Rotor (3) innerhalb des Gehäuses (5) in radialer und/oder axialer Richtung fixierbar ist.

2. Lagerloser Direktantrieb nach Anspruch 1, wobei am Umfang der zentralen Ausnehmung des Anschlussflansches Vorsprünge (8 a,b) koaxial zur Rotorachse und Statorachse angeordnet sind, welche in den Gehäuseinnenraum hinein ragen, wobei an der dem Anschlussflansch (6) zugewandten Stirnseite des Rotors ebenfalls Vorsprünge (8a) koaxial zu Rotorachse und Statorachse angeordnet sind, wobei die Vorsprünge (8a) an Anschlussflansch (6) und Rotor (3) derart ausgebildet sind, dass sich Rotor (3) und Anschlussflansch (6) durch eine axiale Bewegung des Rotors (3) in Richtung des Anschlussflansches (6) mittels einer an der Abdeckung (7) angeordneten Schubstange (8c) derart gegeneinander verspannen, dass Rotor (3) und Stator (4) zueinander zentriert sind.

3. Lagerloser Direktantrieb nach einem der vorhergehenden Ansprüche, wobei der Rotor (3) Klemmverbinder (10) umfasst, mittels derer er mit einer anzutreibenden Welle (2) fest verbindbar ist.

4. Lagerloser Direktantrieb nach einem der vorhergehenden Ansprüche, wobei am Stator (4) ein in axialer Richtung flexibel und in radialer Richtung steif angeordneter Geber (11) angeordnet ist.

5. Lagerloser Direktantrieb nach einem der vorhergehenden Ansprüche, wobei der Anschlussflansch (6) an der den Vorsprüngen (8b) gegenüberliegenden Montageseite Zentriermittel (12) umfasst, welche koaxial zum Stator (4) und Rotor (3) angeordnet sind.

6. Maschine mit Welle (2) und lagerlosem Direktantrieb (1) nach einem der vorhergehenden Ansprüche, wobei der Rotor (3) auf der Maschinenwelle (2) aufgeklemmt ist und das Motorgehäuse (5) mittels des Anschlussflansches (6) an der Maschine angeordnet ist, wobei der Rotor (3) mittels der Welle (2) innerhalb des Stators (4) antreibbar ist.

## Claims

1. Bearing-free direct drive for coupling to a shaft (2), in particular the shaft (2) of a printing press, the bearing-free drive comprising a rotor (3) and a stator (4), the rotor (3) and the stator (4) being arranged coaxially with respect to one another within a housing (5), **characterized in that** the one first end face of the housing consists of a connector flange (6) with a central recess, and a second end face of the housing consists of a covering (7) which lies opposite the connector flange and can be removed, the stator (4) being connected fixedly to the housing (5) and comprising locking means (8 a, b, c), in particular of the connector flange (6), the covering (7) and the rotor (3), by means of which locking means (8 a, b, c) the rotor (3) can be fixed within the housing (5) in the radial and/or axial direction.

2. Bearing-free direct drive according to Claim 1, projections (8 a, b) being arranged coaxially with respect to the rotor axis and the stator axis on the circumference of the central recess of the connector flange, which projections (8 a, b) protrude into the housing interior space, projections (8a) likewise being arranged coaxially with respect to the rotor axis and the stator axis on that end side of the rotor which faces the connector flange (6), the projections (8a) on the connector flange (6) and the rotor (3) being configured in such a way that the rotor (3) and the connector flange (6) are braced against one another by way of an axial movement of the rotor (3) in the direction of the connector flange (6) by means of a pushrod (8c) which is arranged on the covering (7), in such a way that the rotor (3) and the stator (4) are centred with respect to one another.

3. Bearing-free direct drive according to either of the preceding claims, the rotor (3) comprising clamping connectors (10), by means of which it can be connected fixedly to a shaft (2) to be driven.

4. Bearing-free direct drive according to one of the preceding claims, an encoder (11) which is arranged in a flexible manner in the axial direction and in a rigid manner in the radial direction being arranged on the stator (4).

5. Bearing-free direct drive according to one of the preceding claims, the connector flange (6) comprising centring means (12) on the mounting side which lies opposite the projections (8b), which centring means (12) are arranged coaxially with respect to the stator (4) and the rotor (3).

6. Machine having a shaft (2) and a bearing-free direct drive (1) according to one of the preceding claims, the rotor (3) being clamped on the machine shaft (2), and the motor housing (5) being arranged on the machine by means of the connector flange (6), it being possible for the rotor (3) to be driven by means of the shaft (2) within the stator (4).

## Revendications

1. Entraînement direct sans palier pour l'accouplement à un arbre (2), en particulier l'arbre (2) d'une machine d'impression, l'entraînement sans palier comprenant un rotor (3) et un stator (4), le rotor (3) et le stator (4) étant disposés coaxialement l'un à l'autre à l'intérieur d'un boîtier (5), **caractérisé en ce qu'**une première surface frontale du boîtier se compose d'une bride de raccordement (6) avec un évidement central et une deuxième surface frontale du boîtier se compose d'un recouvrement (7) opposé à la bride de raccordement et amovible, le stator (4) étant raccordé fixement au boîtier (5) et des moyens de blocage (8a,b,c) étant prévus, en particulier appartenant à la bride de raccordement (6), au recouvrement (7) et au rotor (3), au moyen desquels le rotor (3) peut être fixé à l'intérieur du boîtier (5) dans une direction radiale et/ou axiale.

2. Entraînement direct sans palier selon la revendication 1, dans lequel des saillies (8a, b) sont disposées sur la périphérie de l'évidement central de la bride de raccordement coaxialement à l'axe du rotor et à l'axe du stator, lesquelles pénètrent dans l'espace interne du boîtier, des saillies (8a) étant également disposées coaxialement à l'axe du rotor et à l'axe du stator au niveau du côté frontal du rotor tourné vers la bride de raccordement (6), les saillies (8a) sur la bride de raccordement (6) et sur le rotor (3) étant réalisées de telle sorte que le rotor (3) et la bride de raccordement (6) soient serrés l'un contre l'autre par un déplacement axial du rotor (3) dans la direction de la bride de raccordement (6) au moyen d'une tige de poussée (8c) disposée sur le recouvrement (7) de telle sorte que le rotor (3) et le stator (4) soient centrés l'un par rapport à l'autre.

3. Entraînement direct sans palier selon l'une quelconque des revendications précédentes, dans lequel le rotor (3) comprend des connecteurs de serrage (10) au moyen desquels il peut être connecté fixement à un arbre (2) à entraîner.

4. Entraînement direct sans palier selon l'une quelconque des revendications précédentes, dans lequel un détecteur (11) disposé de manière flexible dans la direction axiale et rigide dans la direction radiale est disposé sur le stator (4).

5. Entraînement direct sans palier selon l'une quelconque des revendications précédentes, dans lequel la bride de raccordement (6) au niveau du côté de montage opposé aux saillies (8b) comprend des moyens de centrage (12) qui sont disposés coaxialement par rapport au stator (4) et au rotor (3).

6. Machine comprenant un arbre (2) et un entraînement direct sans palier (1) selon l'une quelconque des revendications précédentes, dans laquelle le rotor (3) est serré sur l'arbre de machine (2) et le boîtier de moteur (5) est disposé au moyen de la bride de raccordement (6) sur la machine, le rotor (3) pouvant être entraîné au moyen de l'arbre (2) à l'intérieur du stator (4).
